Europäisches Patentamt

European Patent Office

Office européen des brevets

(11) Publication number: **0 068 666**
**B1**

# EUROPEAN PATENT SPECIFICATION

(45) Date of publication of patent specification: **08.06.88**

(51) Int. Cl.⁴: **B 65 G 21/18, B 65 G 23/04**

(21) Application number: **82302915.2**

(22) Date of filing: **07.06.82**

(54) **Drive system for an endless belt and a conveyor system incorporating that drive system.**

(30) Priority: **27.06.81 GB 8119881**

(43) Date of publication of application:
**05.01.83 Bulletin 83/01**

(45) Publication of the grant of the patent:
**08.06.88 Bulletin 88/23**

(84) Designated Contracting States:
**BE CH DE FR GB IT LI NL SE**

(56) References cited:
**DE-A-2 106 708**
**FR-A-1 385 156**
**US-A-3 682 295**

(73) Proprietor: **APV Baker Limited**
**14 Hansard Gate West Meadows Industrial Estate**
**Derby DE2 6JN (GB)**

(72) Inventor: **Perryment, Alan John**
**Maran Farm Mellis Road Thrandeston**
**Diss Norfolk IP21 4BZ (GB)**

(74) Representative: **Dummett, Thomas Ian Peter et al**
**T.I.P. DUMMETT & Co 14 The Square**
**Martlesham Heath Ipswich Suffolk, IP5 7SL (GB)**

Courier Press, Leamington Spa, England.

## Description

The present invention relates to a conveyor system having an endless belt, notably to a conveyor system for use in a food processing operation.

### Background to the Invention

In freezing foodstuffs, the items of food are usually placed on a moving belt which is moved through a freezing station. Whilst the belt can be a linear belt, it has been proposed to cause the belt to follow a generally helical path through the freezing station around a central rotating drum. The frictional contact between the drum and the edge of the belt carries the belt around the drum in a similar way to that in which a rope is carried by a capstan drum. Typical of such a system is that described in GB—A—1 090 630. However, in such a system the drive drum occupies a comparatively large volume of the whole freezing station and it is necessary to support the belt as it is carried vertically up or down. Such support must be provided from the outer periphery of the belt by cantilever arm supports which are often of comparatively massive construction and which reduce the usable headroom above the surface of the belt.

It has therefore been proposed, for example in GB—A—1 420 576 to form the belt with lateral walls so that the walls on one tier of the belt rest on and are supported by the walls of the tier below. The belt thus forms a self-supporting coil carried by a basal drive and support member. However, such a construction is costly and can cause problems with inadequate circulation of air over the items carried by the belt.

It has also been proposed in French Patent FR—A—1 285 156 to drive the belt by means of a single drive rollers at each curve, the rollers having circumferential recesses which receive and support the edge of the belt as it is carried round the wheel. However, the drive rollers occupy much of the space within the belt system and thus prevent the use of that space for other purposes, e.g. to house the cooling equipment.

It has further been proposed in US Patent No. US—A—3 682 295 to drive the belt by means of a series of drive sprockets which themselves mechanically drive an intermediate belt carrying radial lugs on which the main belt rests. The use of an intermediate belt provides a drive surface which extends around the arc of the path of the belt. However, such a construction is complex and costly and the drive system for the intermediate belt occupies the area within the spiral path of the main belt. Also, the supports for the intermediate belt require considerable headroom between each successive level of the main belt. Such a system has in practice not proved feasible for multi-tier use and its commercial use has been restricted to the driving of the feed or off-take sections of a main belt being driven by a drum as in GB—A—1 090 630.

### Summary of the Invention

We have now devised a form of drive system which, whilst retaining the low belt tension which is achieved using the large rollers wheels or drive belts of the above systems, reduces the problems encountered in the prior art. In the drive system according to the invention, the single roller drive systems used in the prior art at each curve in the path of the belt are replaced by a plurality of small drive rollers engaging directly with the edge of the belt. These rollers frictionally drive and support the belt at individual points around the arc of the curve. Furthermore, the invention enables the belt to be supported from both sides without the use of space consuming cantilever or other supports. Since the drive system is located around the periphery of the belt and support structures within the belt system are minimised, the invention also enables the space hitherto occupied by the single drive drum or the intermediate belt drive system to be used to locate the heating or cooling mechanism, thus leading to a more compact system. By using a direct drive between the rollers and the belt a simple and effective system is achieved which we believe reduced power consumption.

The drive system of the invention is used where the belt follows a path which is repeatedly curved in the plane of the belt, e.g. the belt travels around a generally helical or dog-leg path. In this case, at least one and preferably each curve in the path is provided with a drive system of the invention.

The present invention therefore provides a conveyor system which comprises an endless belt adapted to carry articles through a path, which belt is progressively longitudinally collapsible across its width whereby it can conform to a path having curves in the plane of the belt, which belt is formed into a circuit having one or more curves in the plane of the belt, the belt being adapted to be propelled parallel to its plane by one or more drive stations, at least one of which is located at a curve in the belt, characterised in that at least one of said drive stations comprises a plurality of rotatable rollers which engage directly with and are adapted to propel an edge of the belt, the axis of rotation of the rollers being within ±20° of normal to the plane of the belt at the points of contact, at least some of the rollers at each drive station being caused to rotate by a drive means so as to cause the belt to be propelled by the direct frictional contact between the edge of the belt and said rollers.

Preferably, the drive rollers are located at the inner radius of each curve in the path through which the belt travels.

### Preferred Embodiment of the Invention

To aid understanding of the invention, it will now be described with respect to a preferred form thereof as shown in the accompanying drawings, in which:

Figure 1 is a plan view of a typical assembly;

Figure 2 is a side elevation of the assembly of Figure 1; and

Figures 3 and 4 are detailed views of parts of the assembly of Figure 1.

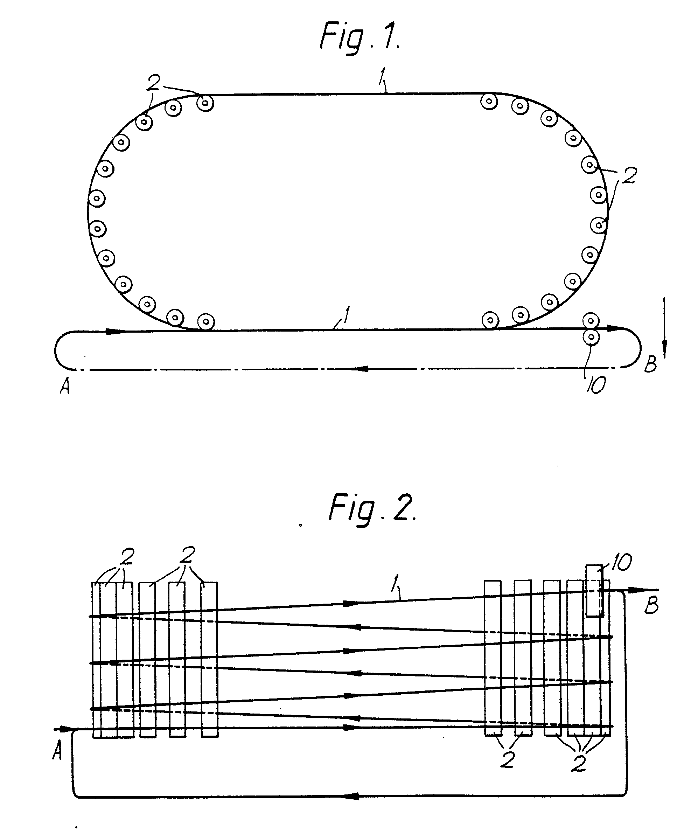

A collapsible belt 1 is caused to travel around a generally helical path. The path need not be of oval plan as shown in Figure 1, but could be circular or of a more complex and convoluted form. However, it is preferred to have a simple path in which the belt it carried through several complete turns of 360°, e.g. 3 to 40 turns, around the vertical axis of a substantially symmetrical plan-view path.

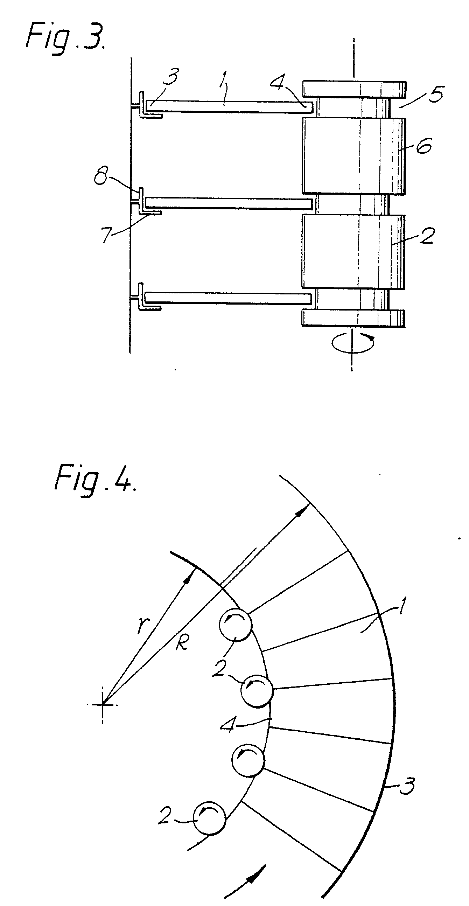

The belt 1 is of any suitable form, e.g. a chain link, slatted or corrugated rubber belt, which can collapse longitudinally along its inner edge to follow a curved path. Preferably, the belt is made from stainless steel or plastic-coated metal and many suitable forms are commercially available. A particularly suitable form comprises a series of rods or bars linking two collapsible chains which form the outer edges of the belt. The bars can carry a mesh or expanded metal platform to provide a plane surface to the belt. Such a belt can be collapsed along one edge to adopt an arcuate form as shown in Figure 4, the radii of curvature of the edges of the belt having a common centre. Typical of suitable belts for present use are those sold by Ashworth Brothers Inc of the United States of America.

In the present invention, the central drive drum used hitherto is replaced by a series of smaller drive rollers 2 disposed around the inner radius of the path around which the belt is carried. We prefer that the rollers 2 are mounted at 5 to 20° intervals along each curve to provide a smooth carriage of the belt around each curve of the path. However, larger intervals between rollers may be acceptable. We prefer that the rollers are arranged so that the belt travels around each curve with its outer edge 3 fully extended and its inner edge 4 fully collapsed.

The rollers serve to support the belt radially as it travels around the arc of the curve and also to drive the belt. Each roller can be driven, e.g. by suitable chain drive, belting or gearing from a prime mover (not shown). However, if desired some (e.g. every other one) of the rollers can be undriven and merely act as idling supports.

The rollers can take the form of simple cylindrical rollers or can be provided with longitudinal ribs or flutes which support the belt and act as drive ribs. If desired the roller or its ribs or flutes can be given an anti-slip coating where excessive slip between the roller and the belt might otherwise occur. Thus, a stainless steel roller can have high density polyethylene ribs affixed thereto, or be fitted with a rubber sleeve. However, we prefer to form the roller from a material with a high coefficient of friction, e.g. an hard nylon.

As shown in Figure 2, we prefer that the belt follow a generally helical path, for example with the belt rising (or falling) as it travels through each curve and remaining level between the curves, or vice versa. To achieve a rise or fall of the belt through each curve the longitudinal axes about which each roller rotates can be inclined, e.g. at from 5 to 10°, to the vertical. Where the axes are inclined toward the centre of the arc of the curve, the belt will ascend as it travels around the curve, and when outward the belt will descend. Alternatively, the rollers can be formed as frusto cones and rotate about substantially vertical axes to achieve a similar effect.

However, a particularly preferred form of roller is that shown in Figure 3 and comprises a substantially cylindrical roller mounted with its longitudinal axis of rotation substantially vertical. The surface of the roller is provided with circumferential grooves 5 or ribs 6 to form circumferential recesses adapted to receive the inner edge 4 of the belt. If desired, the recesses can be provided with an annular rubber or similar sleeve to improve the frictional contact between the roller and the edge of the belt. The recess serves the function of providing the drive surface of the roller and also acts to support the inner edge of the belt. In order to achieve a rise of the belt as it travels around a curve, the recesses on successive rollers on that curve can be formed higher up the rollers; or rollers of essentially identical construction can be mounted at progressively increasing heights around the arc of the curve. If desired, support members can also be provided between rollers to provide additional support to the belt. Also, the surface of the recess which supports the belt can be shaped so as to maximise the area of contact between the roller and the belt.

The outer edge of the belt also requires to be supported. This can be achieved by providing support fingers or rails 7 under each tier of the belt or by providing the belt with upstanding lateral walls as in GB—A—1 420 576 to form a self-supporting stack. Alternatively, a series of rollers similar to those used at the inner radius of the curve can be used. If desired, these outer rollers can be driven to supplement the driving effect of the inner rollers, or can merely be idler rollers. As shown in Figure 1, there may be straight sections of belt between the curves where the drive rollers are located. It is preferred to support both edges of the belt over these straight portions, which can be inclined as shown in Figure 2, or can be level. Suitable support means include lateral support fingers or rails or further rollers. If desired, the support means can provide lateral restraint, for example as when a vertical upstand 8 is provided to the support means 7 as shown in Figure 3. Also, the bearing surfaces of the support means can be given a low friction surface coating or layer, e.g. of high density polyethylene or polytetrafluorethylene.

Whilst it is not always necessary, it may be desired to provide a belt take-off means for drawing the belt 1 off the generally helical path at the desired point and to provide a tensioning effect on the belt. Suitable take-off means include a separate belt drive station 10 in which the belt is drawn off the generally helical path, e.g. by an opposed pair of vertical drive rollers of the type used in the generally helical path, or a conventional horizontal drive roller which can carry teeth to engage in the lateral slats of the belt. The belt is then returned by a suitable path to the feed into the generally helical path to form a closed loop of belt. If desired, the belt in this return portion can be subjected to steam cleaning or other treatments; further, the strip can be twisted in this return portion so that the closed loop of belt adopts a Mobius configuration to reduce lateral wear on the belt by alternating the edges carried on the drive rollers.

In operation, the drive rollers 2 and the take-off means 10 are actuated and cause the belt 1 to come under tension and bear in slipping frictional contact directly against the drive rollers 2. The belt is moved through the generally helical path at the desired rate under the influence of the drive rollers. The take-off means operates at a speed of belt travel the same as or slower, e.g. 5 to 50% slower, than the linear rate of travel of the belt along the generally helical path. Articles, e.g. pieces of foodstuff, are fed to the feed-in point (A) of the belt; are carried through the generally helical path; and are removed at the off-take point B having undergone the desired treatment. The rate of travel of the belt can be varied over wide ranges to suit the items carried on the belt and the treatment to be carried out. By providing the drive system as a series of individual drive rollers in direct contact with the belt, the central space within the helical path is no longer obstructed and can be utilised to aid optimum flow of, e.g. coolant or heating, medium over items carried on the belt. Also, it is possible to support the belt from both edges without the need to provide heavy cantilever constructions, thus enabling a compact construction to be achieved.

Whilst the invention has been described above in terms of a belt driven by rollers on the inner radius of each curve, it is possible to provide the drive rollers on the outer radius in addition to or in place of the drive rollers on the inner radius. In this case the belt requires radial support, e.g. by means of driven or idling rollers on the inner radius of the belt radially opposed to those on the outer radius. This ability to drive the belt from either or both edges provides further flexibility in design and operation of the conveyor system not possible with a centre drive drum system. Also where drive rollers are provided on both edges of the belt it may be possible to increase the load which the belt can carry as compared to conventional systems.

The conveyor system of the invention finds widespread use wherever it is desired to carry items on a path. Thus, for example the system finds use in carrying items through a warehouse or store, in which case the path will not be the generally helical path described above, but could be a series of straight runs connected by 45°, 90°, 180° or other angled bends to form a tortuous path serving the various bays of the warehouse or store. However, the invention is of especial use where it is desired to cause a treating medium (e.g. steam or air) or a coating agent (e.g. chocolate) to flow over items carried on the belt which follows a helical or other path within an enclosed treatment zone. Thus, the invention is of especial use in the food processing industry in the coating, chilling, freezing, cooking or sterilisation of food items.

**Claims**

1. A conveyor system which comprises an endless belt adapted to carry articles through a path, which belt is progressively longitudinally collapsible across its width whereby it can conform to a path having curves in the plane of the belt, which belt is formed into a circuit having one or more curves in the plane of the belt, the belt being adapted to be propelled parallel to its plane by one or more drive stations, at least one of which is located at a curve in the belt, characterised in that at least one of said drive stations comprises a plurality of rotatable rollers which engage directly with and are adapted to propel an edge of the belt, the axis of rotation of the rollers being within ±20° of normal to the plane of the belt at the points of contact, at least some of the rollers at each drive station being caused to rotate by a drive means so as to cause the belt to be propelled by the direct frictional contact between the edge of the belt and said rollers.

2. A conveyor system as claimed in claim 1 characterised in that the rollers (2) each comprise a substantially cylindrical roller having substantially circumferential recesses (5) or projections (6) adapted to receive and support the edge of the belt (1).

3. A conveyor system as claimed in claim 1 characterised in that the rollers (2) are positioned at intervals of from 5 to 20° around the arc of the curve in the path of the belt (1).

4. A drive system as claimed in any one of claims 1 to 3 characterised in that rollers (2) are provided to engage each side of the belt.

5. A drive system as claimed in claim 1 characterised in that the belt (1) follows a generally helical path and the rollers (2) are located at intervals around the inner radius of the curves in that path.

6. A conveyor system as claimed in any one of claims 1 to 5 characterised in that a treating medium is adapted to flow over items carried on the belt (1).

7. A conveyor system according to claim 2 for use in the treatment of food which comprises an endless belt formed from a series of metal rods linking two peripheral collapsible chains, the belt being carried around a generally helical path so that at the curves the inner edge of the belt is fully collapsed and the outer edge is fully extended, the driving means comprising a series of substantially cylindrical rollers (2) rotating about their substantially vertical longitudinal axes, successive curves in the path of the belt being linked by inclined substantially straight sections, whereby the belt (1) is raised as it traverses its path, the rollers (2) being positioned at intervals along each curve of the path of the belt (1).

8. A conveyor system as claimed in claim 7 characterised in that there is provided means for circulating a treating medium over articles carried by the belt and in that those means are located within the space within the helical path of the belt (1).

9. A method for treating items of foodstuff characterised in that an item of foodstuff is fed to the belt of a system as claimed in any one of claims 1 to 8, in that it is carried along the path of the belt and a treating medium is passed over the items.

## Patentansprüche

1. Fördersystem mit einem endlosen Band, das Gegenstände längs eines Wegs befördern kann und das über seine Breite in Längsrichtung progressiv kollabierbar ist, wodurch es sich einem Weg mit Kurven in der Ebene des Bandes anpassen kann, das zu einem Kreislauf mit einer oder mehreren Kurven in der Ebene das Bandes geformt ist und das durch eine oder mehrere Antriebsstationen, von denen sich mindestens eine in einer Kurve im Band befindet, parallel zu seiner Ebene fortbewegt werden kann, dadurch gekennzeichnet, daß mindestens eine der Antriebsstationen eine Vielzahl drehbarer Rollen umfaßt, die direkt in eine Kante des Bandes eingreifen und diese fortbewegen können, wobei die Drehachsen der Rollen sich innerhalb von ± 20% zu der Normalen zur Bandebene an den Kontaktpunkten befindet und mindestens einige der Rollen an jeder Antriebsstation dazu gebracht werden, durch ein Antriebsmittel zu drehen, um so die Fortbewegung des Bandes durch direkten Reibungskontakt zwischen der Kante des Bandes und den Rollen zu bewirken.

2. Fördersystem nach Anspruch 1, dadurch gekennzeichnet, daß die Rollen (2) jeweils als eine praktisch zylindrische Rolle mit im wesentlichen in Umfangsrichtung verlaufenden Vertiefungen (5) oder Vorsprüngen (6) ausgebildet sind, die die Kante des Bandes (1) aufnehmen und tragen können.

3. Fördersystem nach Anspruch 1, dadurch gekennzeichnet, daß die Rollen (2) in Abständen von 5 bis 20° um den Bogen der Kurve im Weg des Bandes (1) angeordnet sind.

4. Antriebssystem nach irgendeinem der Ansprüche 1 bis 3, dadurch gekennzeichnet, daß die Rollen (2) an beiden Seiten des Bandes angreifen.

5. Fördersystem nach Anspruch 1, dadurch gekennzeichnet, daß das Band (1) einem im allgemeinen spiralförmigen Weg folgt und die Rollen (2) in Abständen um den inneren Radius der Kurven in diesem Weg angeordnet sind.

6. Fördersystem nach irgendeinem der Ansprüche 1 bis 5, dadurch gekennzeichnet, daß ein Behandlungsmedium vorgesehen ist, um auf dem Band (1) fortbewegte Gegenstände zu fließen.

7. Fördersystem nach Anspruch 2 zur Verwendung bei der Behandlung von Lebensmitteln, das ein endloses Band, gebildet aus einer Reihe von Metallstäben aufweist, die zwei periphere kollabierbare Ketten verbinden, wobei das Band um einen im allgemeinen spiralförmigen Weg geführt wird, so daß an den Kurven die Innenkante des Bandes völlig kollabiert und die Außenkante vollständig gestreckt wird, wobei das Antriebsmittel eine Reihe von praktisch zylindrischen Rollen (2) umfaßt, die um ihre praktisch vertikalen Längsachsen rotieren, wobei aufeinander folgende Kurven im Weg des Bandes durch geneigte, praktisch gerade Abschnitte verdunden werden, wodurch das Band (1) angehoben wird, während es seinen Weg durchquert und wobei die Rollen (2) in Abständen entlang jeder Kurve des Weges des Bandes (1) angeordnet sind.

8. Fördersystem nach Anspruch 7, dadurch gekennzeichnet, daß Mittel vorgesehen sind, um ein Behandlungsmedium über durch das Band fortbewegten Gegenstände zu zirkulieren und daß diese Mittel innerhalb des Raumes innerhalb des spiralförmigen Weges des Bandes (1) angeordnet sind.

9. Verfahren zur Behandlung von Nahrungsmittelgegenständen, dadurch gekennzeichnet, daß ein Nahrungsmittelgegenstand auf das Band eines Systems nach einem der Ansprüche 1 bis 8 gegeben wird, in welchem er entlang des Weges des Bandes bewegt und ein Behandlungsmedium über die Gegenstände geleitet wird.

## Revendications

1. Système de transport qui comprend une courrie sans fin destinée à supporter des articles suivant un trajet, la courroie pouvant se raccourcir progressivement en direction longitudinale et différemment suivant sa largeur de manière qu'elle puisse suivre un trajet ayant des courbes, dans le plan de la courroie, la courroie formant un circuit ayant une ou plusieurs courbes dans son plan, la courroie étant destinée à être déplacée parallèlement à son plan par un ou plusieurs postes d'etraînement dont l'un au moins se trouve dans une une corbe de la courroie, caractérisé en ce que l'un au moins des postes d'entraînement comporte plusieurs rouleaux rotitifs qui sont placés directement au contact d'un bord de la courroie et sont destinés à faire avancer la courroie, l'axe de rotation des rouleaux faisant un angle de ±20° avec la normale au plan de la courroie aux points de contact, certains des rouleaux au moins, à chaque poste d'entraînement, étant entraînes en rotation par un dispositif d'entraînement afin qu'ils provoquent le déplacement de la courroie par contact direct par friction entre le bord de la courroie er les rouleaux.

2. Système de transport selon la revendication 1, caractérisé en ce que les rouleaux (2) comportent chacun un rouleau sensiblement cylindrique ayant des cavités sensiblement circonférentielles (5) ou des saillies sensiblement circonférentielles (6) destinées à loger et supporter le bord de la courroie (1).

3. Système de transport selon la revendication 1, caractérisé en ce que les rouleaux (2) sont disposés à des intervalles de 5 à 20° suivant l'arc de courbe du trajet de la courroie (1).

4. Système de d'entraînement selon l'une quelconque revendications 1 à 3, caractérisé en ce que les rouleaux (2) sont destinés à être au contact des deux côtes de la courroie.

5. Système de transport selon la revendication 1, caractérisé en ce que la courroie (1) suit un trajet de forme générale hélicoïdale e les rouleaux (2) sont disposés à certains intervalles autour de la périphérie interne des courbes suivant ce trajet.

6. Système de transport selon l'une quelconque revendications 1 à 5, caractérisé en ce qu'un fluide de traitement est destiné à s'écouler sur les articles transportés sur la courroie (1).

7. Système de transport selon la revendication 2, destiné à être utilisé pour le traitement d'aliments, comprenant une courroie sans fin formée d'une série de tiges métalliques reliant deux chaînes périphériques qui peuvent se raccourcir, la courroie étant transportée autour d'un trajet de forme générale hélicoïdale afin que, dans les courbes, le bord interne de la courroie soit totalement raccourci et le bord externe totalement allongé, le dispositif d'entraînement comprenant une série de rouleaux (2) de forme sensiblement cylindrique, tournant autour de leurs axes longitudinaux qui sont sensiblement verticaux, des courbes successive du trajet de la courroie étant reliées par des tronçons inclinés sensiblement rectilignes, si bien que la courroie (1) remonte lorsqu'elle décrit son trajet, les rouleaux (2) étant disposés à certains intervalles le long de chaque courbe du trajet de la courroie (1).

8. Système de transport selon la revendication 7, caractérisé en ce qu'il comporte un dispositif destiné à faire circuler un fluide de traitement sur les articles transportés par la courroie, et en ce que ce dispositif est disposé dans un espace délimité dans le trajet hélicoïdal de la courroie (1).

9. Procédé de traitement d'articles alimentaires, caractérisé en ce qu'un article alimentaire est transmis à une courroie d'un système selon l'une quelconque des revendications 1 à 8, en ce qu'il est transporté le long de trajet de la courroie, et un fluide de traitement circule sur les articles.

Fig.1.

Fig.2.

Fig.3.

Fig.4.